Europäisches Patentamt

European Patent Office

Office européen des brevets

(19)

(11) Publication number: **0 345 382 B1**

(12) # EUROPEAN PATENT SPECIFICATION

(45) Date of publication of patent specification: **12.08.92**   (51) Int. Cl.⁵: **F16K  31/08**

(21) Application number: **88201140.6**

(22) Date of filing: **06.06.88**

(54) **Mechanically and pneumatically operable valve.**

<table>
<tr><td>

(43) Date of publication of application:
**13.12.89 Bulletin  89/50**

(45) Publication of the grant of the patent:
**12.08.92 Bulletin  92/33**

(84) Designated Contracting States:
**AT BE CH DE FR GB IT LI LU NL**

(56) References cited:
**DE-A- 3 409 673**
**DE-B- 2 435 256**
**FR-A- 2 472 684**
**GB-A- 2 103 391**

</td><td>

(73) Proprietor: **N.V. INTERNATIONAL SANITARY WARE-MANUFACTURING CY, S.A. in verkort: N.V. INTERSAN S.A.**
**Ommeganstraat 51**
**B-9770 Kruishoutem(BE)**

(72) Inventor: **Van Marcke, Karel Carl**
**Kasteelstraat 7**
**B-9770 Kruishoutem(BE)**

(74) Representative: **Pieraerts, Jacques et al**
**Bureau Gevers S.A. rue de Livourne 7 bte 1**
**B-1050 Bruxelles(BE)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a valve for regulating fluid flow between an inlet and an outlet and having a magnet positionable between a first state and a second state and located in a first chamber defined by a bulkhead, a diaphragm and sidewall ; means for urging the magnet to the first state ; a magnetically responsive disc positionable within a second chamber in response to repositioning of the magnet for regulating flow intermediate the inlet and the outlet by inhibiting flow when in a first state and by accomodating flow when in a second state in response to the first and second states, respectively, of the magnet ; first means for relocating the diaphragm towards the first chamber by exerting a pushing force upon the diaphragm, said first chamber being provided with an inlet-outlet port for gas ; and means for repositioning the magnet to its second state in response to relocation of the diaphragm and against the force exerted by the urging means.

Such a valve is disclosed in German patent No. 24 35 256. The diaphragm of this known valve is an air tight diaphragm which delimits the first chamber from a further chamber which is completely sealed off from the atmosphere. The first means for relocating the diaphragm are composed of a push-button which is pneumatically connected to said further chamber. Actuation of this push-button forces air into said further chamber to establish an above ambient pressure into this chamber. The increased pressure results in movement of the diaphragm towards the first chamber to reposition the magnet. Upon release of the push-button air flows out of said further chamber towards said push-button so that the diaphragm returns back to its initial position. In order to allow these repositioning of the diaphragm, the first chamber is provided with an inlet-outlet port so that this first chamber is always at atmospheric pressure.

A drawback of the valve disclosed in DE-B-24 35 256 is that it allows only one way of operation, i.e. by actuation of said push-button.

An object of the present invention is therefore to provide a valve of the hereabove defined type which allows at least two different modes of operation.

To this end, the diaphragm of the valve according to the invention is provided with an opening to allow gas flow from the first chamber to a space in fluid communication with the atmosphere and with means to prevent gas flow from said space through said opening towards the first chamber.

The valve according to the invention can be operated, on the one hand, by operating said first means to push the diaphragm towards said first chamber. Said valve may, on the other hand, also be operated by reducing the pressure within the first chamber, for example by means of a pneumatic push-button which can be connected with said inlet-outlet port. On actuation of said pneumatic push-button air is forced into the first chamber, which air flows through the opening in the diaphragm to the atmosphere. Upon release of said pneumatic push-button, a below ambient pressure is created within the first chamber and said diaphragm is relocated. An important advantage of the valve according to the invention is that it allows at least two different modes of operation which are not mutually exclusive.

In a first preferred embodiment of the valve according to the invention, said first means comprise a push-button for mechanically actuating said valve, and an anchor positionally responsive to said push-button for relocating the diaphragm, whereby, on actuation of said push-button the disc magnetically responds to the magnet to regulate the flow intermediate the inlet and outlet.

In a second preferred embodiment of the valve according to the invention, said first means comprise in combination :

    a) a third chamber having an initial volume, which third chamber is provided for being changed in volume ; and
    b) means associated with the volume of said third chamber influencing the location between the first and second states of the magnet to control the flow between the inlet and the outlet.

The valve according to the invention may comprise both preferred embodiments of the first means for relocating the diaphragm, and may thus be provided with one mechanical and two pneumatic push-buttons, i.e. one pneumatic push-button for changing the volume of the third chamber and another pneumatic push-button for reducing the pressure within the first chamber.

Further particularities and advantages of the valve according to the invention will become apparent as the description proceeds.

The present invention may be described with greater specificity and clarity with reference to the following drawings, in which :

    Figure 1 illustrates a prior art valve in the closed state;
    Figure 2 illustrates a prior art valve in the open state;
    Figure 3 illustrates a mechanically operated embodiment of the present invention and shown in the closed state;
    Figure 4 illustrates a mechanically operated embodiment of the present invention and shown in the open state;
    Figure 5 illustrates a metering control usable in conjunction with the embodiment shown in Figures 3 and 4;

Figure 6 illustrates a pneumatically operated pressure responsive embodiment of the present invention shown in the open state;

Figure 7 illustrates a metering control mechanism usable in conjunction with the embodiment shown in Figure 6;

Figure 8 illustrates a pneumatically operated vacuum responsive embodiment of the present invention and incorporating a metering control mechanism;

Figure 9 illustrates an embodiment of the present invention having a plurality of mechanically and pneumatically operable control systems;

Figure 10 illustrates the embodiment of the present invention illustrated in Figures 3 to 5 usable for controlling fluid flow through a fluid dispensing device;

Figure 11 illustrates the embodiment of the present invention illustrated in Figures 6, 7, and 8 usable to control the fluid flow in a fluid dispensing apparatus; and

Figure 12a - 12f are schematic diagrams which illustrate the prior art valves and the present invention and provide a comparison therebetween.

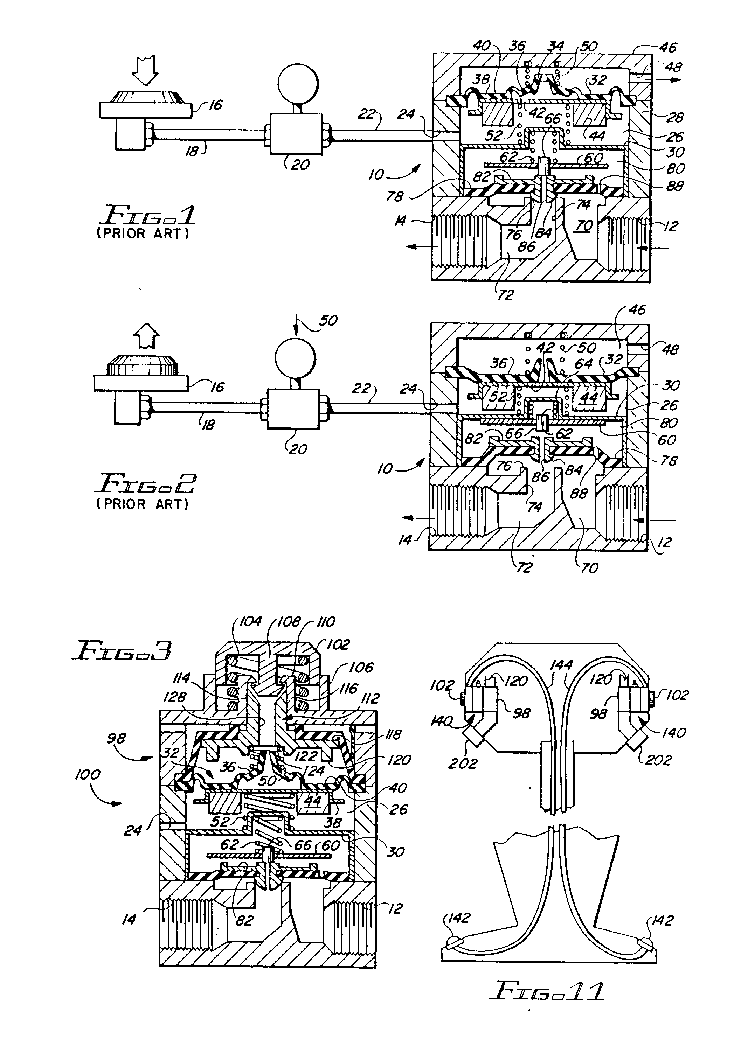

Referring to Figure 1, there is shown a prior art valve 10 and a first mode to operate this valve for regulating fluid flow from inlet 12 to outlet 14 through the valve. Actuation of the valve is effected by a remote pneumatic push-button 16. On actuation of the push-button, a flow of air is forced through conduit 18, metering device 20 and conduit 22 through inlet port 24 of valve 10. The air enters a chamber 26 defined by housing 28, bulkhead 30 extending across the interior of the housing and diaphragm 32. The diaphragm includes a central opening 34 openable in response to upward deflection of central portion 36 of the diaphragm. A retaining plate 38 is adhesively or otherwise secured to the under surface of annular band 40 of diaphragm 32. An aperture 42 is disposed in the central part of the retaining plate to permit fluid communication from within chamber 26 to opening 34. The retaining plate supports in a depending relationship an annular magnet 44. A further chamber 46 in fluid communication with opening 34 is defined by diaphragm 32 and the sidewalls and cover of housing 28. An exhaust port 48 interconnects chamber 46 with the atmosphere. Thereby, the air injected into chamber 26 by pneumatic push-button 16 flows from chamber 26 through aperture 42 to raise central portion 36 of diaphragm 32 in response to the slight pressure rise intermediate retaining plate 32 and the diaphragm to permit airflow through opening 34 into chamber 46 and through exhaust port 48.

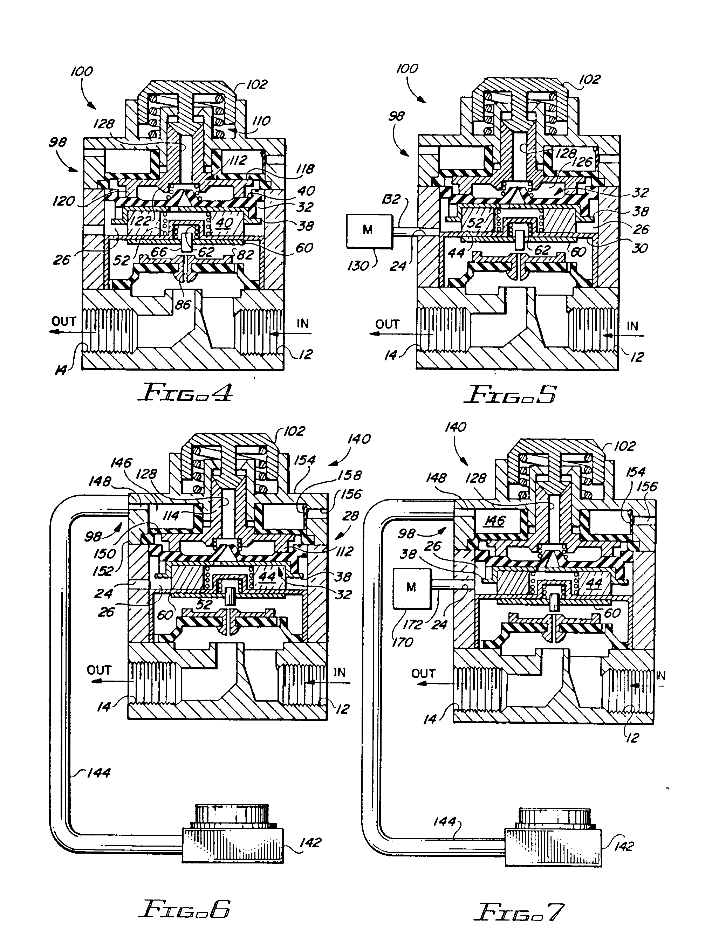

After pneumatic push-button 16 has injected a burst of air into chamber 26, further operation of valve 10 will be described with joint reference to Figures 1 and 2. On release of push-button 16, a below ambient air pressure environment will be created therein. This low pressure environment will tend to draw air from within cavity 26 through inlet port 24, conduit 22, metering device 20 and conduit 18. Simultaneously, the cessation of air pressure intermediate retaining plate 38 and central portion 36 of diaphragm 32 will draw the central portion adjacent the retaining plate, as illustrated in Figure 2. Such repositioning of the central portion will cause the diaphragm to cover aperture 42. This repositioning is aided by bias means, such as coil spring 50 extending from the cover of housing 28 against central portion 36. The closing of aperture 42 precludes airflow therethrough into chamber 26. The continuing flow of air from within chamber 26 to pneumatic push-button 16 will reduce the pressure within the chamber. Such pressure reduction, together with the higher ambient air pressure present within chamber 46 by means of exhaust port 48, will force diaphragm 32 downwardly. The resulting downward movement of magnet 44 will place it proximate bulkhead 30.

The magnetic field created by magnet 44 is not shielded by bulkhead 30 and will magnetically attract disc 60. Such attraction will draw the disc upwardly in proximity of or adjacent bulkhead 30 and against bias means, which may be a coil spring 62 acting against the disk and extending downwardly from within an inverted cup 64 of the bulkhead. The disc includes a centrally located downwardly depending stopper 66.

The valving function performed by valve 10 to regulate fluid flow intermediate inlet 12 and outlet 14 will be described with joint reference to Figures 1 and 2. A chamber 70 is in fluid communication with inlet 12. Similarly, a chamber 72 is in fluid communication with outlet 14. An upwardly extending passageway 74 having an upper edge 76 is in fluid communication with chamber 72. A diaphragm 78 extends across chamber 70 and passageway 74 to define in combination with bulkhead 30 and a skirt depending therefrom or the sidewalls of housing 28 a further chamber 80. A seat 82 is attached, adhesively or otherwise, to the central part of diaphragm 78. The seat includes a downwardly extending stopper section 84 for sealing engagement with edge 76 of passageway 74. A passageway 86 extends through the stopper section to provide fluid communication between chamber 80 and passageway 74. As is evident from Figure 1, stopper 66 extending from disc 60 is positioned and configured to seal the upper end of passageway 86 when the disc is in its lower position. An aperture 88 which may be pin hole sized, is formed in diaphragm 78 to interconnect chamber 70 in fluid communication with chamber 80.

In the closed state of valve 10, as illustrated in Figure 1, a degree of pressure is present in chamber 70 due to the pressure of the fluid attempting to flow into valve 10 through inlet 12. A portion of the fluid under pressure flows through aperture 88 to pressurize chamber 80. The pressure within this chamber acts upon diaphragm 78 and attached seat 82 to force stopper section 84 into sealing engagement with edge 76 of passageway 74. Flow through passageway 86 is inhibited by stopper 66 of disc 60 in response to the force exerted by coil spring 62. Accordingly, no flow of fluid from inlet 12 through valve 10 to outlet 14 will occur.

On raising of disc 60 due to the magnetic attraction exerted by magnet 44, stopper 66 is raised and passageway 86 is opened. The pressure differential formerly in existence between chamber 80 and chamber 72, which maintained diaphragm 78 in its downward position, dissipates as a result of fluid flow from within chamber 80 through passageway 86 into passageway 74. And, the pressure acting upon the underside of diaphragm 78 due to the pressure present within cavity 70 will force the diaphragm upwardly. The upward relocation of the diaphragm will unseat stopper section 84 and permit fluid flow directly from cavity 70 into passageway 74. Accordingly, inlet 12 has now been placed in fluid communication with outlet 14 and fluid flow therebetween will occur.

For reasons stated above, chamber 26 is at below ambient air pressure, which pressure maintains magnet 44 in its lower position. By incorporating a metering devide 20 in fluid communication with chamber 26 through conduit 22 and inlet port 24, it is possible to regulate the extent of time for which a below ambient pressure will be present within chamber 26. That is , inflow of air through metering device 20, as represented by arrow 50 will be regulated to flow into chamber 26 at a controlled rate. The resulting pressure rise within chamber 26 will diminish the force of the ambient air pressure within chamber 26 acting upon the top side of diaphragm 32 until at some point, biasing means or coil spring 52 will be capable of forcing retaining plate 38 and attached magnet upwardly. Upward movement of the magnet will, as a function of distance, reduce the magnetic effect upon disc 60. The reduced magnetic effect will, at some point, be overpowered by the downward force exerted by coil spring 62 against the disc. Thereafter, the disc will be forced downwardly adjacent seat 82. Upon such relocation of the disc, passageway 86 will be sealed by stopper 66. The pressure then present within cavity 70 is greater than the pressure present in the fluid flow through passageway 74 simultaneously, the pressure present within cavity 70 will be translated into chamber 80 through pin hole 88. As the pressure present above seal 82 (within chamber 80) is greater than the pressure present below the seat and within passageway 74, seat 82 will be forced downwardly until stopper section 84 engages edge 76 of passageway 74. Upon such repositioning of seat 82, fluid flow between inlet 12 and outlet 14 will cease. Accordingly, metering device 20 is capable of regulating the extent of time of fluid flow between inlet 12 and outlet 14 subsequent to actuation of pneumatic push-button 16. The degree of time delay until valve 10 is closed, may be setable by adjustments attendant metering device 20.

This first mode of operation allows valve 10 to be used as a metering valve with delayed shut off of the fluid flow.

A second mode of operation of valve 10 is to connect pneumatic push-button 16 with conduit 18 to exhaust port 48 instead of inlet port 24 and leave the inlet port open. At the same time no metering device is mounted in the conduit. When this push-button is actuated, a flow of air is forced through conduit 18 and exhaust port 48 into chamber 46.

The pressure increase in chamber 46, with the help of bias means, such as coil spring 50 extending from the cover of housing 28 against central portion 36 of diaphragm 32 will force this central portion down against the retaining plate 38 and cover aperture 42. The continuing flow of air into chamber 46 will require more volume, such that it forces chamber 46 to expand. This expansion of chamber 46, will require a contraction of the volume in chamber 26 and thus expell air through inlet port 24.

As magnet 44 is lowered, its magnetic attraction upon disc 60 is increased until at some point the attraction is greater than the force exerted by coil spring 62. Thereafter disc 60 is raised against or into proximity with the lower surface of bulkhead 30. For reasons stated above, fluid flow between inlet 12 and outlet 14 will now occur.

On release of pneumatic push-button 16, air will flow back out of the expanded chamber 46 through exhaust port 48 and conduit 18 into the increased volume of the push-button, and a commensurate airflow into chamber 26 will occur through inlet port 24. This way diaphragm 32, the retaining plate 38 and the magnet 4 are raised and the magnetic attraction upon disc 60 will be diminished until the force of coil 62 is sufficient to downwardly reposition the disc against seat 82. The resulting cessation of flow through passageway 86 effected by stopper 66 will terminate further flow between inlet 12 and outlet 14.

This second mode of operation allows valve 10 to be used as a non-metering valve, which will stay open as long as the push-button is activated.

From the above description, it becomes evident that the above-described first and second modes of operation are mutually exclusive.

If a first pneumatic pushbutton with a timing device is attached at inlet port 24, and a second pneumatic pushbutton without timing device is attached to exhaust port 48, actuating the first pneumatic push-button will cause an airflow into chamber 26 and through opening 42 into chamber 46 and into the second pneumatic push-button; both chambers will then become pressurized above ambient pressure.

When the first pneumatic push-button is released, there will be an airflow from chamber 46 to chamber 26 to the first pneumatic push-button, where a below ambient pressure was created caused by its release. This airflow helped by bias means, such as coil spring 50 will cause center portion 36 of the diaphragm to block off opening 42. This closure of chamber 46 will cause this chamber, even when expanded downwards, as explained below, to stay under above ambient pressure. The continuing flow of air from chamber 26 to the first pneumatic push-button will reduce the pressure within the chamber and will cause the magnet 44 down to open the valve.

Slowly, air entering the timing device connected to the first pneumatic push-button will raise the below ambient pressure environment within chamber 26 until it has been raised to ambient pressure. However, as an above ambient pressure prevails in chamber 46, magnet 44 will stay down and the valve will remain open.

It is mainly out of a search to solve these problems, that the present invention originated. Mainly by adding a differently engineered top valve body, including new engineered parts and membranes, there has been added some major new modes of operation plus an enormous flexibility in using these modes of operation in a mutually non-exclusive manner.

The first improvement made to the valve 10 was the addition of a third mode of operation. It consists of a one piece push-button that, actuated from the outside, directly relocates the magnet to control the fluid flow. This mode of operation may be referred to as a non-metering mechanical push-button mode.

A second improvement was to modify the mechanical push-button mode of operation to incorporate a metering control mechanism. However, while both of these improvements work mutually non-exclusively with the first mode of operation (vacuum with metering), they do not work with the second mode of operation (pressure without metering). The present invention was developed to overcome these limitations.

The purpose of the present invention is to offer full flexibility in the usage of the valve, by allowing it to be operated by any of the three following different modes of operation whether actuated separately, in any combination of two, and even all three together, and whether metered or non-metered : pneumatic vacuum operation mechanical; pressure operation created by a pneumatic force; and mechanical pressure operation created by a mechanical force.

To provide a better understanding of the operation and benefits attendant the present invention over valve 10 (Fig. 1 and 2) reference will be made to schematic drawings shown in Figures 12a - 12f. Valve 10 basically consists of four chambers (1-4) having the following functions :

chamber 1 : The fluid inlet and outlet chamber;

chamber 2 : The pressure differential control or second chamber which allows the membrane in between chamber 1 and 2 to control the flow between the inlet and outlet parts of chamber 1;

chamber 3 : The vacuum or first chamber, in which vacuum can be created to relocate the magnet; and

chamber 4 : The pressure chamber, in which pressure can be created to relocate the magnet.

Chambers 1 and 2 are part of the fluid side of valve 10 and have no connections with chamber 3 and 4 of the control side of the valve. It is to be noted that when chamber 3 was used as the vacuum chamber, chamber 4 needed to be an open chamber under ambient pressure. These characterists are basically the cause of the mutual exclusive characteristics of valve 10.

Figure 12a provides a representation of valve 10. Figure 12b illustrates how chamber 3 is used as a vacuum chamber (as in the first mode of operation described above in detail). It illustrates that chamber 3 can be sealed off with vacuum by the membrane in between chamber 3 and 4; that a timing device is attached to the inlet of chamber 3; and that chamber 4 is open to the ambient air. Figure 12c illustrates how chamber 4 is used as a pressure chamber (as in the second mode of operation described in detail above). It illustrates that chamber 4 can be sealed off with pressure by the membrane in between chamber 3 and 4; and that chamber 3 is open to the ambient air. Figure 12d illustrates the first improvement, where first means comprising a mechanical push-button are used to relocate the magnet. Whether chambers 3 and 4 are closed or not, is not essential for this mode of operation. Figure 12e illustrated the second improvement, where the mechanical push-button is used with a metering device. It illustrates that a vacuum can be created as the push-button lets air escape via chamber 4 to the ambient air, that a metering device is attached to the inlet of chamber 3, and that chamber 3 can be sealed off with vacuum by the membrane in between chamber 3 and 4. Figure 12f illustrates the present invention. With an additional membrane, a fifth chamber is completely sealed off from the fourth chamber, and by the inclusion in chamber 4 of a mechanical pressure transducing anchor which is independent of the push-button, the different chambers are assigned a different function : Chamber 1 is the fluid inlet and outlet chamber; Chamber 2 is the fluid pressure differential control or second chamber; Chamber 3 is the vacuum or first chamber, and never needs to be a chamber open to ambient air as was previously required to operate the valve in a non-metering pressure activated manner; Chamber or space 4 is open (ambient) chamber, and never needs to be a pressure chamber, as was previously required to operate the valve in a non-metering pressure activated manner; and third Chamber 5 is an independent pressure chamber.

The essential difference between valve 10 and the present invention is that a plurality of modes of operation are possible which may be simultaneous and which are not mutually exlusive. The use of an independent mechanical pressure transducing anchor allows this anchor to be operated by either the pressure chamber (5) membrane or either the external push-button or together therewith. It is to be understood that the anchor does not encumber any of the chareteristics of the prior art modes of operation (see Drawings 2 to 5).

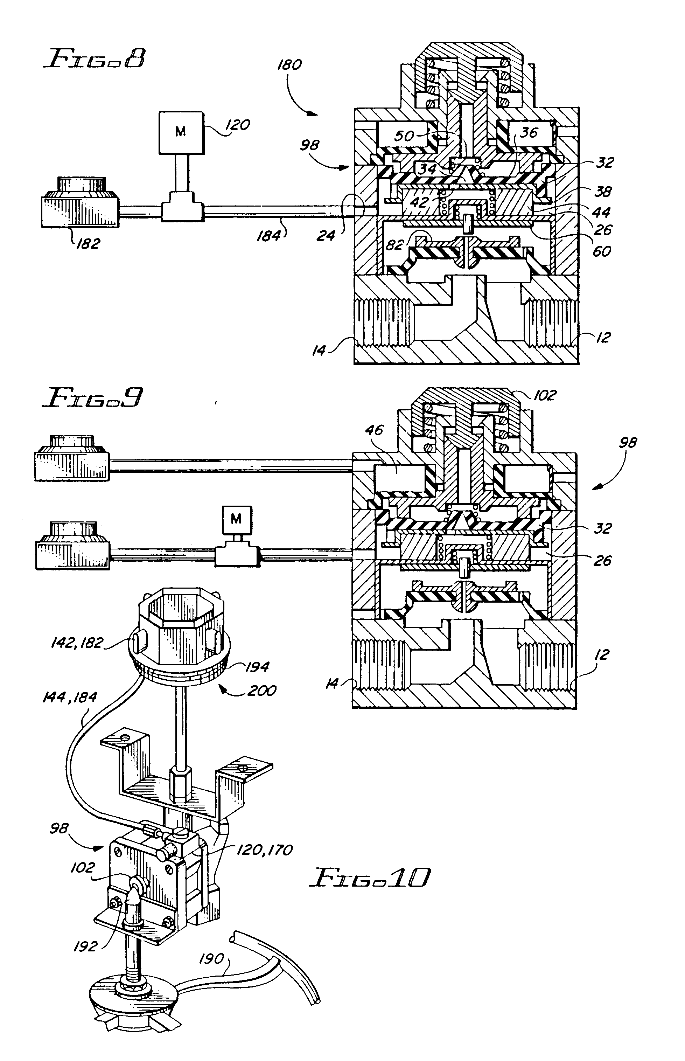

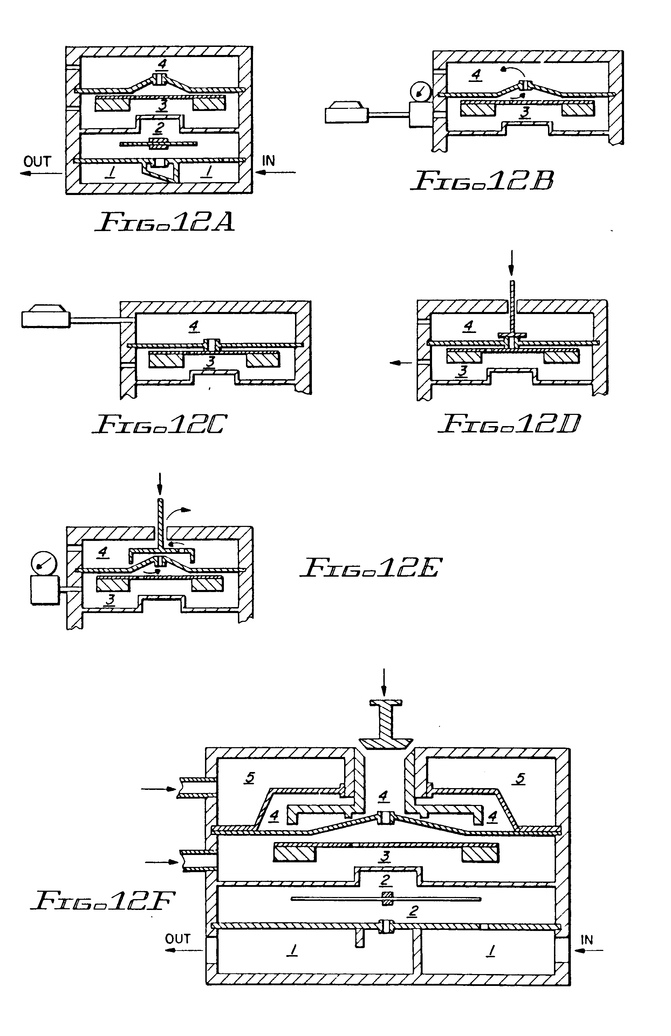

Referring now to Figures 3 and 4, there will be described a valve 98 which is an improvement over and which is a mechanically operable embodiment 110. For the sake of simplicity in description and clarity, elements in this embodiment common to valve 10 will be assigned like reference numerals. Valve 98 includes a push-button 102 biased into the extended position by a coil spring 104 or the like. A shroud 106 may be incorporated to prevent unwanted lateral displacement of the push-button. A prong 108 extends downwardly from push-button 102, which prong is captured against unwanted extension by retaining member 110. The prong acts against an independent pressure transducing anchor 112 having a central cylinder 114 slidably retained by the sidewall 116 of retaining member 110. The anchor further includes a plate 118 having a downwardly extending annular protrusion 120 circumscribing a second downwardly extending annular protrusion 122. Annular protrusion 120 is approximately coincident with annular band 40 of diaphragm 32 while annular protrusion 122 is approximately coincident with central portion 36 of the diaphragm. Annular protrusion 122 also defines a depression 124 for receivingly retaining coil spring 50. It is important that annular protrusion 122 be configured such that central portion 36 of diaphragm 32 is not pushed adjacent retaining plate 38, and thus leave aperture 42 uncovered. It is to be noticed that the anchor has a centrally located channel 128 that will allow free flow of air through this anchor.

On depressing push-button 102, anchor 112 is forced downwardly. Downward movement of the anchor produces a downward movement of diaphragm 32, retaining plate 38 and magnet 44 as a result of the downward force exerted upon the annular band 40 by annular protrusion 120. The air within first chamber 26 is expelled therefrom through inlet port 24 via aperture 42 in retaining plate 38 through the central opening of the diaphragm 32, along channel 128 of anchor 112 and the interstices between push-button 102 and shroud 106. As magnet 44 is lowered, its magnetic attraction upon disc 60 is increased until at some point the attraction is greater than the forme exerted by coil spring 62. Thereafter, disc 60 is raised against or into proximity with the lower surface of bulkhead 30. For reasons stated above, fluid flow between inlet 12 and outlet 14 will now occur.

On release of push-button 102, retaining plate 38 will rise on response to the force exerted by coil spring 52 and a commensurate air flow into chamber 26 will occur through inlet port 24. As magnet 44 is raised, its magnetic attraction upon disc 60 will be diminished until the force of coil 63 is sufficient to downwardly reposition the disc against seat 82. The resulting cessation of flow through passageway 86 effected by stopper 66 will terminate further flow between inlet 12 and outlet 14.

From the above description, it becomes evident that embodiment 100 of valve 98 will remain open commensurate with the presure of a force depressing push-button 102. On removal of such force the valve will be automatically closed.

Referring to Figure 5, there is shown a means for maintaining embodiment 100 of valve 98 open for a predetermined time subsequent to release of push-button 102. A metering device 130 is pneumatically secured to inlet port 24 through conduit 132. The metering device includes a means for permitting air flow into conduit 132 at a setable controlled rate. As discussed above, in the depressed state of push-button 102, the volume of first chamber 26 has been diminished by an outflow of air via aperture 42 in retaining plate 38 through the central opening of diaphragm 32 along channel 128 of anchor 112 and the interstices between push-button 102 and shroud 106. Because of the presence of the metering device pneumatically in communication with chamber 26, an automatic air inflow through inlet port 24 will not occur in response to an attempted upward movement of diaphragm 32 in response to the force of coil spring 52. Since such upward movement is inhibited by the pressure differential between the below ambient pressure within chamber 26 and the atmospheric pressure present in the space 126 above the diaphragm; space 126 is in fluid communication with the atmosphere through the non-pneumatically sealed components of the push-button assembly. Thus, the retaining plate will be retained in its lowered state by the pressure differential. Such lowered state will also maintain disc 60 approximate or adjacent bulkhead 30 and fluid flow between inlet 12 and outlet 14 will continue.

The pressure differential can be reduced by permitting metering device 130 to bleed air into chamber 26 at a controlled area. The time delay between the release of push-button 102 until flow intermediate inlet 12 and outlet 14 will cease, is a function of the rate of air bleed. As air bleeds into chamber 26, the pressure differential across diaphragm 32 is slowly reduced until at some point diaphragm 32 will be raised sufficiently as a result of the force exerted by coil spring 52 to draw magnet 44 out of sufficient magnetic influence upon disc 60 to retain the disc and thereafter it will be forced downwardly by its coil spring 62; and, the valve will close to preclude further flow between inlet 12 and outlet 14.

Referring now to Figures 6 and 7, there will be described embodiment 140 of valve 98 which is pneumatically operated. A pneumatic push-button 142 being depressed, forces a flow of air through conduit 144. The conduit is in fluid communication with an expandable annular third chamber 146 via inlet port 148. The annular third chamber is formed by an annular diaphragm 150 in sealed engagement with sidewall 152 and top 154 of housing 28. The annular chamber includes a further inlet port 156, which port is sealed for one-way flow by a flapper valve 158. That is, flow through the inlet port into annular chamber 146 will occur upon the presence of a below atmospheric pressure within the annular chamber through inward bending or distending of the flapper valve; however, the flapper valve will preclude an outflow of air through inlet port 156.

In operation, upon actuation of pneumatic push-button 142, air will flow into annular chamber 146 and cause a pressure rise therein. The pressure rise will exert a force upon diaphragm 150 to force the latter downwardly. Downward excursion of the diaphragm will result in a commensurate downward movement of anchor 112. The downward movement of the anchor is not inhibited by push-button 102 as prong 108 includes a cone-shaped lower end for engagement with cylinder 114 which permits downward movement of the cylinder independent of the prong. Downward movement of anchor 112 will bring about a downward movement of diaphragm 32 and attached retaining plate 38. The commensurate downward movement of magnet 44 will bring about a magnetic attraction of disc 60 to raise it. Upon upward movement of disc 60, valve 98 will open and fluid flow will occur between inlet 12 and outlet 14.

On release of pneumatic push-button 142, a flow of air will be drawn thereinto from annular cavity 146 and permit diaphragm 140 to contract to its steady state condition. Such contraction permits the force of coil spring 52 to cause an upward movement of retaining plate 38 which results in commensurate upward movement of diaphragm 32 and anchor 112 to raise magnet 44 out of magnetic influence with disc 60. The disc will thereafter be lowered in response to coil spring 52 and valve 98 will be turned off to prevent further fluid flow between inlet 12 and outlet 14.

Although the pneumatic system represented by pneumatic push-button 142, conduit 144 and annular chamber 146 is intended to be a closed system, some leakage to the atmosphere may occur. To insure that actuation of pneumatic push-button 142 will always bring about a sufficient expansion and downward movement of diaphragm 150 in response to pressure within annular cavity 146, means must be provided to replenish any air which may have leaked out from within the closed pneumatic system. Such means is, for example, provided by inlet 156 and flapper valve 158. That is, whenever annular cavity 146 is below ambient pressure, air will flow through inlet port 156 into the annular cavity will occur. Thus, compensation is provided to accomodate any loss of air from within the closed system represented by pneumatic push-button 142, conduit 144 and annular cavity 146.

It may be noted that valve 98 will only remain open so long as pressure is present within annular cavity 146. Under certain circumstances, it may be preferable to delay closure of valve 98 after actuation of pneumatic push-button 142. Such delay is available from the apparatus illustrated in Figure 7. The operation of valve 98 as described with respect to embodiment 140 illustrated in Figure 6 results in an evacuation of air from within whamber 26, via aperture 42 in retaining plate 38 through the central opening of diaphragm 32, along channel of anchor 112 and the interstices between push-button 102 and shroud 106. However, by attaching a pneumatic metering device 170 to inlet port 24, and after withrawl of the above atmospheric pressure within annular cavity 146, upward movement of the retaining plate in response to the force of coil spring 52 will be restrained as air inflow to chamber 26 is restricted by metering device 170.

Thus, magnet 44 car be maintained in magnetic influence upon disc 60 for predeterminable time period as a function of the air bleed through metering device 170. Accordingly, cessation of flow between inlet 12 and outlet 14 can be delayed after cessation of the influence of pneumatic push-button 142 for a period of time.

In Figure 8, there is shown an embodiment 180 of a valve 98 which incorporates the prior art means for actuating the valve. A pneumatic push-button 182, of the type illustrated in Figures 1 and 2, may be connected with a metering device 120, through a conduit 184 with inlet port 24.

In operation, on actuation of pneumatic push-button 182, air is forced into first chamber 26 which air flows through aperture 42 in retaining plate 38 to the atmosphere via opening 34 in central part 36 of diaphragm 32, along channel 128 of anchor 112 and the interstices between the push-button 102 and shroud 106. On release of pneumatic push-button 182, central part 36 of diaphragm 32 is forced downwardly to sealingly cover aperture 42 as a result of the force exerted by coil spring 50 and as a below ambient pressure environment is developed within first chamber 26 due to action of pneumatic push-button 182. The resulting pressure differential across diaphragm 32 will cause ambient air pressure to act upon the upper surface of the diaphragm to lower it and force attached retaining plate 38 and magnet 44 downwardly. At some point, disc 60 will be magnetically attracted to magnet 44 and the disc will be raised above seat 82. Thereafter, flow between inlet 12 and outlet 14 will occur.

Bleed air may be introduced to chamber 26 by metering device 120 (if used) to permit a controlled or regulated reduction of the pressure differential across diaphragm 32. Such reduction will permit, at some point, raising of retaining plate 38 with a commensurate raising of the magnet and reduction of the magnetic attraction upon disc 60 to permit the disc to become reseated upon seat 82. Thus, valve 98 will be closed at a point in time delayed from release of pneumatic push-button 182.

Referring to Figure 9, there is shown a valve 98 which may be actuated by any of the three actuating devices described above. First, the valve may be actuated mechanically by depressing push-button 102, as described with respect to embodiment 100. Secondly, it may be actuated by operation of pneumatic push-button 142 to create a pressure rise within third chamber 146, as described with respect to embodiment 140. Third, it may be actuated by operation of pneumatic push-button 182 to develop a below ambient pressure within first chamber 26, as described with respect to embodiment 180. It is to be appreciated that the combined use of these three modes of operation does not present mutually exclusive conditions that prevent operation of the valve.

Figure 10, illustrates a combination of embodiment 100, 140 and/or 180 of valve 98 usable in conjunction with a water dispensing device. This clearly illustrates the flexibility in usage of the pneumatical and the mechanical actuation systems simultaneously, without any problems of mutual exclusivity.

Referring to Figure 10, there is illustrated an environment within which push-button operated embodiment 100 of valve 98 is particularly usable. A foot actuated pedal 190, through various mechanical arrangements, can be caused to raise a tapered pin 192. The pin acts against push-button 102 to depress the same. Upon depressing the push-button, valve 98 will permit water flow therethrough from a source of water under pressure to water dispensing ring 194 or a similar device. A pneumatic push-button 142/182 provides a source of air under pressure through conduit 144/184 to valve 98. The valve may include a metering device 170/120. On actuation of pneumatic push-button 142/182, valve 98 is opened to permit a flow of water therethrough from a source of water under pressure to a water distribution device 200. Devices of this type illustrated in Figure 10 are often used in locker rooms, washrooms, or similar environments having a circular or other wash basin with a certrally mounted water dispensing ring or device to permit a plurality of persons to wash simultaneously.

Figure 11 illustrates a combination of embodiment 100 and 140 to valve 98. A pneumatic push-button 142 provides a source of air under pressure through conduit 144 to valve 98. A pus-button 102 provides a source of mechanical pressure. The valve may include a metering device 120. When actuating push-button 102 and 142, separately or simultaneously, valve 98 will permit water under pressure flow therethrough from a source of water under pressure to a water dispensing spray nozzle 202 or a similar device.

## Claims

1.  A valve for regulating fluid flow between an inlet (12) and an outlet (14) and having a magnet (44) positionable between a first state and a second state and located in a first chamber (26) defined by a bulkhead (30), a diaphragm (32) and sidewall ; means (52) for urging the magnet (44) to the first state ; a magnetically responsive disc (60) positionable within a second chamber (80) in response to repositioning of the magnet (44) for regulating flow intermediate the inlet (12) and the outlet (14) by inhibiting flow when in a first state and by accomodating flow when in a second state in response to the first and second states, respectively, of the magnet (44) ; first means for relocating the diaphragm (32) towards the first chamber (26) by exerting a pushing force upon the diaphragm (32), said first chamber (26) being provided with an inlet-outlet port (24) for gas ; and means for repositioning the magnet (44) to its second state in response to relocation of the diaphragm (32) and against the force exerted by the urging means (52), characterized in that the diaphragm (32) is provided with an opening (34) to allow gas flow from the first chamber (26) to a space (126) in fluid communication with the atmosphere and with means to prevent gas flow from said space (126) through said opening (34) towards the first chamber (26).

2. A valve according to claim 1, characterized in that said first means comprise a push-button (102) for mechanically actuating said valve, and an anchor (112) positionally responsive to said push-button (102) for relocating the diaphragm (32), whereby, on actuation of said push-button (102) the disc (60) magnetically responds to the magnet (44) to regulate the flow intermediate the inlet (12) and outlet (14).

3. A valve according to claim 1 or 2, characterized in that said first means comprise in combination :
   a) a third chamber (146) having an initial volume, which third chamber (146) is provided for being changed in volume ; and
   b) means associated with the volume of said third chamber (146) influencing the location between the first and second states of the magnet (44) to control the flow between the inlet (12) and the outlet (14).

4. A valve according to claim 3, characterized in that said valve is provided with means (142) for pneumatically changing the volume of said third chamber (146), whereby, on actuation of the latter means (142) the disc (60) magnetically responds to the magnet (44) to regulate the flow intermediate the inlet (12) and outlet (14).

5. A valve according to claim 3 or 4, characterized in that said first means comprise a pressure transducing anchor (112) disposed between the third chamber (146) and the diaphragm (32), which anchor (112) transfers the said chamber volume changes into relocation between said first and second states of said magnet (44) to control the valve.

6. A valve according to anyone of the claims 3 to 5, characterized in that said valve is provided moreover with a push-button (102) cooperating mechanically with said anchor (112) for repositioning the magnet (44) from the first state to control the valve.

7. A valve according to claim 2 or 5, characterized in that said anchor (112) includes means for transferring air through said anchor (112).

8. A valve according to anyone of the claims 1 to 7, characterized in that said valve comprises second means (182) for relocating the diaphragm (32) towards the first chamber (26) independent of operation of said first means, which second means (182) are provided for reducing the pressure within the first chamber (26) to relocate the diaphragm (32).

9. A valve according to anyone of the claims 1 to 8, characterized in that said valve comprises means for delaying the influence of the urging means (52) to return the magnet (44) to its first state.

10. A valve according to claim 9, characterized in that said delaying means comprise a metering device (120) for bleeding air into the first chamber (26) at a controlled rate when the pressure within the first chamber (26) is below the atmospheric pressure.

**Revendications**

1. Soupape de réglage d'un écoulement de fluide entre une entrée (12) et une sortie (14) et comportant un aimant (44) positionnable entre un premier état et un second état et situé dans une première chambre (26) déterminée par une cloison (30), un diaphragme (32) et une paroi latérale; des moyens (52) pour pousser l'aimant (44) dans la première position; un disque (60) magnétiquement sensible positionnable dans une seconde chambre (80) en réponse à un repositionnement de l'aimant (44) pour régler l'écoulement entre l'entrée (12) et la sortie (14) en empêchant l'écoulement en étant dans un premier état et en adaptant l'écoulement en étant dans un second état en réponse respectivement au premier et second états de l'aimant (44); des premiers moyens pour resituer le diaphragme (32) vers la première chambre (26) en exerçant une force de poussée sur le diaphragme (32), la première chambre (26) étant munie d'un orifice d'entrée/de sortie (24) pour du gaz; et des moyens pour repositionner l'aimant (44) dans son second état en réponse à la resitution du diaphragme (32) et à l'encontre de la force exercée par les moyens de poussée (52), caractérisée en ce que le diaphragme (32) est muni d'une ouverture (34) pour permettre un écoulement de gaz depuis la première chambre (26) jusqu'à un espace (126) en communication de fluide avec l'atmosphère et avec des moyens pour empêcher un écoulement de gaz depuis l'espace (126), au travers de l'ouverture (34), vers la première chambre (26).

2. Soupape suivant la revendication 1, caractérisée en ce que les premiers moyens comportent un bouton-poussoir (102) pour actionner manuellement la soupape, et une palette (112) positionnellement sensible au bouton-poussoir (102) pour resituer le diaphragme (32), le disque (60) répondant par cela magnétiquement à l'aimant (44) à l'actionnement du bouton-poussoir (102) afin de régler l'écoulement entre l'entrée (12) et la sortie (14).

3. Soupape suivant l'une ou l'autre des revendications 1 et 2, caractérisée en ce que les premiers moyens susdits comportent en combinaison :

    a) une troisième chambre (146) qui a un volume initial, la troisième chambre (146) étant équipée pour être modifiée en volume, et

    b) des moyens, adjoints au volume de la troisième chambre (146), influençant la situation entre les premier et second états de l'aimant (44) pour commander l'écoulement entre l'entrée (12) et la sortie (14).

4. Soupape suivant la revendication 3, caractérisée en ce que la soupape est munie de moyens (142) pour modifier pneumatiquement le volume de la troisième chambre (146), le disque (60) répondant magnétiquement par cela à l'aimant (44) à l'actionnement des derniers moyens (142) afin de régler l'écoulement entre l'entrée (12) et la sortie (14).

5. Soupape suivant l'une ou l'autre des revendications 3 et 4, caractérisée en ce que les premiers moyens comprennent une palette (112) qui transmet une pression et qui est disposée entre la troisième chambre (146) et le diaphragme (32), la palette (112) transférant les modifications de volume de chambre susdites en une resitution entre les premier et second états de l'aimant (44) afin de commander la soupape.

6. Soupape suivant l'une quelconque des revendi-

dications 3 à 5, caractérisée en ce que la soupape est munie en outre d'un bouton-poussoir (102) qui coopère mécaniquement avec la palette (112) pour repositionner l'aimant (44) à partir du premier état afin de commander la soupape.

7. Soupape suivant l'une ou l'autre des revendications 2 et 5, caractérisée en ce que la palette (112) comporte des moyens de transfert d'air au travers de ladite palette (112).

8. Soupape suivant l'une quelconque des revendications 1 à 7, caractérisée en ce que ladite soupape comporte des seconds moyens (182) pour resituer le diaphragme (32) vers la première chambre (26) indépendamment du fonctionnement des premiers moyens, les seconds moyens (182) étant équipés pour réduire la pression dans la première chambre (26) afin de resituer le diaphragme (32).

9. Soupape suivant l'une quelconque des revendications 1 à 8, caractérisée en ce que la soupape comporte des moyens pour retarder l'influence des moyens de poussée (52) afin de renvoyer l'aimant (44) à son premier état.

10. Soupape suivant la revendication 9, caractérisée en ce que les moyens de retardement comportent un dispositif de dosage (120) pour purger de l'air dans la première chambre (26) à un taux commandé lorsque la pression dans la première chambre (26) est en dessous de la pression atmosphérique.

**Patentansprüche**

1. Ventil zum Regulieren einer Fluidströmung zwischen einem Einlaß (12) und einem Auslaß (14) mit einem Magneten (44), der zwischen einer ersten Lage und einer zweiten Lage positionierbar ist und in einer ersten Kammer (26) angeordnet ist, die durch eine Trennwand (30), eine Membran (32) und eine Seitenwand festgelegt ist; mit einem Mittel (52) zum Bewegen des Magneten (44) zur ersten Lage; mit einer magnetisch reagierenden Scheibe (60), die innerhalb einer zweiten Kammer (80) als Reaktion auf eine Repositionierung des Magneten (44) positionierbar ist zum Regulieren einer Strömung zwischen dem Einlaß (12) und dem Auslaß (14) durch Hemmung der Strömung wenn sich die Scheibe in einer ersten Lage befindet, und durch Zulassen einer Strömung, wenn sich die Scheibe in einer zweiten Lage befindet, jeweils als Reaktion auf die erste bzw. zweite Lage des Magneten (44); mit ersten Mitteln zum Verschieben der Membran (32) gegen die erste Kammer (26) durch Ausüben einer Druckkraft auf die Membran (32), wobei die erste Kammer (26) mit einer Einlaß-Auslaßöffnung (24) für Gas versehen ist; und mit Mitteln zum Repositionieren des Magneten (44) in seine zweite Lage als Reaktion auf die Verschiebung der Membran (32) und gegen die durch das Druckmittel (52) ausgeübte Kraft, dadurch gekennzeichnet, daß die Membran (32) mit einer Öffnung (34) versehen ist, um eine Gasströmung von der ersten Kammer (26) zu einem Zwischenraum (126) in Fluidverbindung mit der Atmosphäre zuzulassen und mit Mitteln, um eine Gasströmung vom Zwischenraum (126) durch die Öffnung (34) gegen die erste Kammer (26) zu verhindern.

2. Ventil nach Anspruch 1, dadurch gekennzeichnet, daß die ersten Mittel einen Druckknopf (102) zum mechanischen Betätigen des Ventils umfassen und einen Anker (112), der durch seine Lageveränderung auf den Druckknopf (102) reagieren kann, um die Membran (32) zu verschieben, wodurch bei Betätigung des Druckknopfes (102) die Scheibe (60) magnetisch auf den Magneten (44) reagiert, um die Strömung zwischen dem Einlaß (12) und dem Auslaß (14) zu regulieren.

3. Ventil nach Anspruch 1 oder 2, dadurch gekennzeichnet, daß die ersten Mittel in Kombination umfassen:
   a) eine dritte Kammer (146) mit einem anfänglichen Volumen, wobei die dritte Kammer (146) mit veränderlichem Volumen vorgesehen ist; und
   b) Mittel in Zuordnung zum Volumen der dritten Kammer (146), die die Stellung des Magneten (44) zwischen der ersten und der zweiten Lage beeinflussen, um die Strömung zwischen dem Einlaß (12) und dem Auslaß (14) zu steuern.

4. Ventil nach Anspruch 3, dadurch gekennzeichnet, daß das Ventil mit Mitteln (142) zum pneumatischen Ändern des Volumens der dritten Kammer (146) versehen ist, wodurch bei Betätigung der letztgenannten Mittel (142) die Scheibe (60) magnetisch auf den Magneten (44) reagiert, um die Strömung zwischen dem Einlaß (12) und dem Auslaß (14) zu regulieren.

5. Ventil nach Anspruch 3 oder 4, dadurch gekennzeichnet, daß die ersten Mittel einen druckumwandelnden Anker (112) umfassen, der zwischen der dritten Kammer (146) und der Membran (32) angeordnet ist, wobei der Anker (128) die Volumenänderungen der Kammer in eine Verschiebung des Magneten (44) zwischen der ersten und zweiten Lage überträgt, um das Ventil zu steuern.

6. Ventil nach einem der Ansprüche 3 bis 5, dadurch gekennzeichnet, daß das Ventil darüberhinaus mit einem Druckknopf (102), der mechanisch mit dem Anker (112) zusammenarbeitet, versehen ist zum Repositionieren des Magneten (44) aus der ersten Lage, um das Ventil zu steuern.

7. Ventil nach Anspruch 2 oder 5, dadurch gekennzeichnet, daß der Anker (112) Mittel zum Transferieren von Luft durch den Anker (112) enthält.

8. Ventil nach einem der Ansprüche 1 bis 7, dadurch gekennzeichnet, daß das Ventil zweite Mittel (182) zum Verschieben der Membran (32) gegen die erste Kammer (26) unabhängig vom Betrieb der ersten Mittel enthält, wobei die zweiten Mittel (182) zum Reduzieren des Druckes innerhalb der ersten Kammer (26) vorgesehen sind, um die Membran (32) zu verschieben.

9. Ventil nach einem der Ansprüche 1 bis 8, dadurch gekennzeichnet, daß das Ventil Mittel zum Verzögern des Einflusses des Druckmittels (52) enthält, um den Magneten (44) in seine erste Lage zurückzubringen.

10. Ventil nach Anspruch 9, dadurch gekennzeichnet, daß die Verzögerungsmittel eine Dosiervorrichtung (120) umfassen, um Luft mit einem gesteuerten Durchsatz in die erste Kammer (26) abzulassen, wenn der Druck innerhalb der ersten Kammer (26) unterhalb des Atmosphärendruckes ist.

EP 0 345 382 B1

FIG.1
(PRIOR ART)

FIG.2
(PRIOR ART)

FIG.3

FIG.11

FIG. 4

FIG. 5

FIG. 6

FIG. 7

*Fig. 8*

*Fig. 9*

*Fig. 10*

$FIG.12A$

$FIG.12B$

$FIG.12C$

$FIG.12D$

$FIG.12E$

$FIG.12F$